(19) **Europäisches Patentamt**
**European Patent Office**
**Office européen des brevets**

(11) **EP 3 239 252 B1**

(12) **EUROPEAN PATENT SPECIFICATION**

(45) Date of publication and mention
of the grant of the patent:
**19.12.2018 Bulletin 2018/51**

(51) Int Cl.:
***C09D 7/00*** *(2018.01)*

(21) Application number: **16172310.1**

(22) Date of filing: **31.05.2016**

(54) **RESIN COMPOSITION FOR COATING ENGINE PISTON AND METHOD OF FABRICATING THE SAME**

HARZZUSAMMENSETZUNG ZUR BESCHICHTUNG EINES MOTORKOLBENS UND VERFAHREN ZUR HERSTELLUNG DAVON

COMPOSITION DE RÉSINE POUR PISTON DE MOTEUR DE REVÊTEMENT ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.04.2016 KR 20160052695**

(43) Date of publication of application:
**01.11.2017 Bulletin 2017/44**

(73) Proprietor: **Dong Yang Piston Co., Ltd.**
**Gyeonggi-do 15420 (KR)**

(72) Inventors:
• **PARK, Kang Wook**
**Gyeonggi-do 14255 (KR)**
• **WANG, Zuo-Jia**
**Gyeongsangnam-do 52765 (KR)**
• **YANG, Jun Kui**
**Seoul 06293 (KR)**
• **RYU, Kwan Ho**
**Gyeonggi-do 15623 (KR)**

• **LEE, Jeong Keon**
**Incheon 21680 (KR)**

(74) Representative: **Mounteney, Simon James**
**Marks & Clerk LLP**
**90 Long Acre**
**London**
**WC2E 9RA (GB)**

(56) References cited:
**EP-A1- 2 706 272        KR-A- 20070 081 566**
**KR-A- 20140 011 627     US-A1- 2015 047 498**

• **Macieji Babiak ET AL: "PTNSS-2013-SC-085 Coating the bearing surface of a piston with a layer of nanotubes as a means of reducing friction", Combustion Engines, 31 December 2013 (2013-12-31), pages 525-529, XP55291567, Retrieved from the Internet: URL:http://www.combustion-engines.eu/entit yfiles/files/articles_published/ptnss-2013 -sc-085.pdf [retrieved on 2016-07-27]**

**Description**

BACKGROUND

1. Field

The present invention relates to a resin composition and a method of fabricating the same and, more particularly, to a resin composition capable of providing a coated layer on at least part of an engine piston reciprocating in a cylinder of an internal combustion engine and receiving the pressure of high-temperature and high-pressure explosion in a combustion process to provide motive power to a crankshaft through a connecting rod, and a method of fabricating the same.

2. Description of the Related Art

Currently, vehicle engines require high power, light weight, and low friction to increase fuel efficiency. In general, a piston of the vehicle engine reciprocates in a cylinder at high speed. A skirt of the piston is in contact with an internal wall of the cylinder during reciprocation of the piston, thereby causing power loss, noise, and vibration. Accordingly, friction between the internal wall of the cylinder and the skirt of the piston is reduced by providing a coated layer on the skirt of the piston.

A technology related thereto includes KR 10-2007-0081566 (Publication date: 08.17.2007; Title of the Invention: Coating method of piston-skirt for automobile).

SUMMARY

The present invention provides a resin composition for coating an engine piston and a method of fabricating the same, by which a coefficient of friction of a coated layer provided on the engine piston may be improved and stabilization of a coating process may be achieved. However, the scope of the present invention is not limited thereto.

According to an aspect of the present invention, there is provided a resin composition for coating an engine piston, the resin composition comprising carbon nanotubes (CNTs) as a reinforcement, wherein a parameter represented by a product of a weight ratio of CNTs to the resin composition and an average aspect ratio of CNTs is within a range of 200 to 1600.

According to another aspect of the present invention, there is provided a resin composition for coating an engine piston, the resin composition comprising carbon nanotubes (CNTs) as a reinforcement, wherein a parameter represented by a product of a weight ratio of CNTs to the resin composition and an average aspect ratio of CNTs is within a range of 500 to 1600.

The reinforcement may further include graphene.

The reinforcement may further contain a binder including polyamide-imide (PAI) or epoxy, a solvent including N-methylpyrrolidone (NMP) or γ-butyrolactone (GBL), and a solid lubricant including graphite, molybdenum disulfide ($MoS_2$), or polytetrafluoroethylene (PTFE).

According to another aspect of the present invention, there is provided a method of fabricating a resin composition for coating an engine piston, the resin composition comprising carbon nanotubes (CNTs) as a reinforcement and capable of providing a coated layer on at least a part of the engine piston, and the method including adjusting a parameter represented by a product of a weight ratio of CNTs to the resin composition and an average aspect ratio of CNTs, to control a coefficient of friction of the coated layer and the viscosity of the resin composition.

The adjusting may include adjusting the parameter represented by the product of the weight ratio of CNTs in the resin composition and the average aspect ratio of CNTs to be within a range of 200 to 1600.

The adjusting may include adjusting the parameter represented by the product of the weight ratio of CNTs to the resin composition and the average aspect ratio of CNTs to be within a range of 500 to 1600.

The reinforcement may further include graphene, and the method may further include adjusting a second parameter represented by a mixing ratio of CNTs and graphene, to control the coefficient of friction of the coated layer and the viscosity of the resin composition.

BRIEF DESCRIPTION OF THE DRAWINGS

The above and other features and advantages of the present invention will become more apparent by describing in detail embodiments thereof with reference to the attached drawings in which:

FIG. 1 is a graph showing viscosity of a resin composition for coating an engine piston, and a coefficient of friction of a coated layer according to test examples of the present invention based on a parameter expressed as a product of a weight ratio and an average aspect ratio of CNTs;

FIG. 2 is a graph showing coatability based on the viscosity of the resin composition; and

FIGS. 3 and 4 are graphs for comparing a coefficient of friction and wear resistance of a coated layer (new coating) implemented in a case when a mixing ratio of CNTs and graphene is 7:3 among test examples of Table 2, to coefficients of friction and wear resistance of coated layers implemented using resin compositions containing graphite and molybdenum disulfide ($MoS_2$).

DETAILED DESCRIPTION

The present invention is defined by claims 1-5 as attached. Hereinafter the present invention will be described in detail by explaining embodiments of the invention with reference to the attached drawings. The invention may, however, be embodied in many different forms and should not be construed as being limited to the embodiments set forth herein; rather, these embodiments are provided so that this disclosure will be thorough and complete, and will fully convey the concept of the invention to one of ordinary skill in the art. In the drawings, the thicknesses or sizes of layers are exaggerated for clarity.

A skirt of an engine piston of a vehicle may be coated with a coating agent including a resin composition to about several to several ten $\mu$m to reduce friction with an internal surface of a cylinder. Therefore, a resin composition for coating an engine piston according to an embodiment of the present invention may serve as a coating solution used to provide a coated layer on at least a part, e.g., a skirt, of an engine piston of a vehicle.

A resin composition for coating an engine piston according to embodiments of the present invention contains a binder, a solvent, a solid lubricant, and a reinforcement. For example, the resin composition may contain 10 to 40 wt% of the binder, 40 to 60 wt% of the solvent, 5 to 30 wt% of the solid lubricant, and 0.1 to 5 wt% of the reinforcement.

The solvent may include N-methylpyrrolidone (NMP) and/or $\gamma$-butyrolactone (GBL). Compared to NMP which is a harmful solvent, GBL is a harmless material and thus may be used in compliance with environmental regulations. The binder may include polyamide-imide (PAI) and/or epoxy. The solid lubricant may include graphite, molybdenum disulfide ($MoS_2$), and/or polytetrafluoroethylene (PTFE).

The present inventor has found that carbon nanotubes (CNTs) serving as the reinforcement correspond to a material having a low coefficient of friction, a high hardness level, a high elastic modulus, and a high dispersibility, and that a coefficient of friction and a wear rate of a coated layer are reduced if, for example, a skirt of a piston is coated with a composition containing CNTs.

According to an embodiment of the present invention, it is found that a coating solution and a coated layer having properties, which are the most optimized for a coating process, may be obtained by effectively adding CNTs as a low-friction and wear-resistant reinforcement. For example, viscosity of the coating solution may exert influence on stabilization of the coating process and the thickness or quality of the ultimately coated layer, and a coefficient of friction of the coated layer may exert influence on noise, vibration, and harshness (NVH) properties and fuel efficiency properties of an engine. According to an embodiment of the present invention, it is found that the coefficient of friction of the coated layer and the viscosity of the resin composition may be effectively controlled by adjusting a first parameter expressed as a product of a weight ratio of CNTs in the resin composition and an average aspect ratio of CNTs.

According to another embodiment of the present invention, it is found that a coating solution and a coated layer having properties, which are the most optimized for a coating process, may be obtained by adding CNTs and graphene as a low-friction and wear-resistant reinforcement. Specifically, it is found that the coefficient of friction of the coated layer and the viscosity of the resin composition may be effectively controlled by adjusting a second parameter expressed as a mixing ratio of CNTs and graphene.

A description is now given of test examples to show correlations between the viscosity of the resin composition and the coefficient of friction of the coated layer, and the above-described parameters. However, the following test examples are provided for a better understanding of the present invention and embodiments of the present invention are not limited thereto.

**First Parameter: Product of Weight Ratio and Average Aspect Ratio of CNTs**

Table 1 shows results of measuring the viscosity of the resin composition and the coefficient of friction of the coated layer based on the first parameter expressed as the product of the weight ratio and the average aspect ratio of CNTs serving as the reinforcement. However, although the viscosity value of the resin composition may be understood as an absolute value independent of measuring equipment, the coefficient of friction of the coated layer may be measured to a different absolute value depending on measuring equipment and thus may be understood as a relative value.

In Table 1, 'CNT Content' refers to a weight ratio (unit : wt%) of CNTs to the total resin composition containing the binder, the solvent, the solid lubricant, and the reinforcement, and 'CNT Aspect Ratio' refers to an average value of aspect ratios, i.e., ratios of lengths to cross-sectional diameters, of CNTs. For example, in Test Examples 2, 6, 8, 11, and 13, since an average length of CNTs is 5 $\mu$m and an average cross-sectional diameter thereof is 15 nm, an average aspect ratio thereof is 333. In Test Examples 5, 7, 9, 12, and 14, since an average length of CNTs is 20 $\mu$m and an average cross-sectional diameter thereof is 10 nm, an average aspect ratio thereof is 2000.

In Table 1, 'CNT Content $\times$ CNT Aspect Ratio' refers to the first parameter expressed as the product of the weight ratio and the average aspect ratio of CNTs. For example, according to Test Example 6 of Table 1, when the content of CNTs serving as the reinforcement is 0.2 wt% of the total resin composition and the average aspect ratio thereof is 2000, the viscosity of the resin composition containing the binder, the solvent, the solid lubricant, and the reinforcement is 21,000 cps and the coefficient of friction of the ultimately coated layer is 0.06.

[Table 1]

|  | CNT Content | CNT Aspect Ratio | CNT Content $\times$ CNT Aspect Ratio | Viscosity (cps) | Coefficient of Friction |
|---|---|---|---|---|---|
| Test Example 1 | 0.5 | 250 | 125 | 19,000 | 0.15 |
| Test Example 2 | 0.5 | 333 | 166.5 | 21,000 | 0.12 |
| Test Example 3 | 0.1 | 2500 | 250 | 22,000 | 0.07 |
| Test Example 4 | 1.0 | 333 | 333 | 22,500 | 0.065 |
| Test Example 5 | 0.2 | 2000 | 400 | 21,000 | 0.06 |
| Test Example 6 | 2.0 | 333 | 666 | 26,000 | 0.03 |
| Test Example 7 | 0.4 | 2000 | 800 | 23,000 | 0.02 |
| Test Example 8 | 3.0 | 333 | 999 | 31,000 | 0.02 |
| Test Example 9 | 0.6 | 2000 | 1200 | 27,000 | 0.025 |
| Test Example 10 | 5.0 | 250 | 1250 | 40,000 | 0.03 |
| Test Example 11 | 4.0 | 333 | 1332 | 38,000 | 0.025 |
| Test Example 12 | 0.8 | 2000 | 1600 | 35,000 | 0.035 |
| Test Example 13 | 5.0 | 333 | 1665 | 50,000 | 0.035 |
| Test Example 14 | 1.0 | 2000 | 2000 | 50,000 | 0.04 |

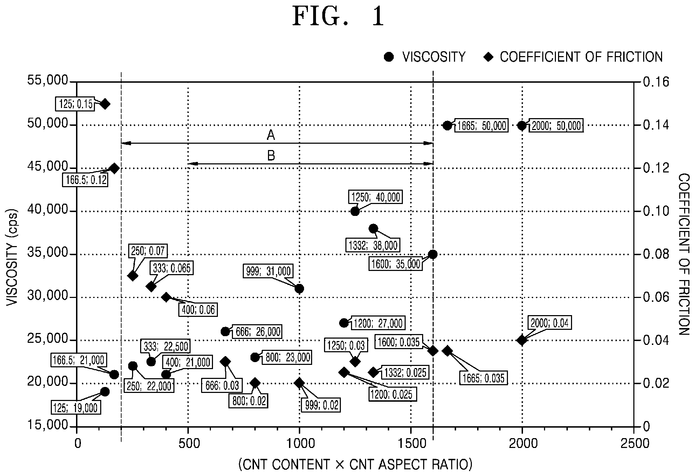

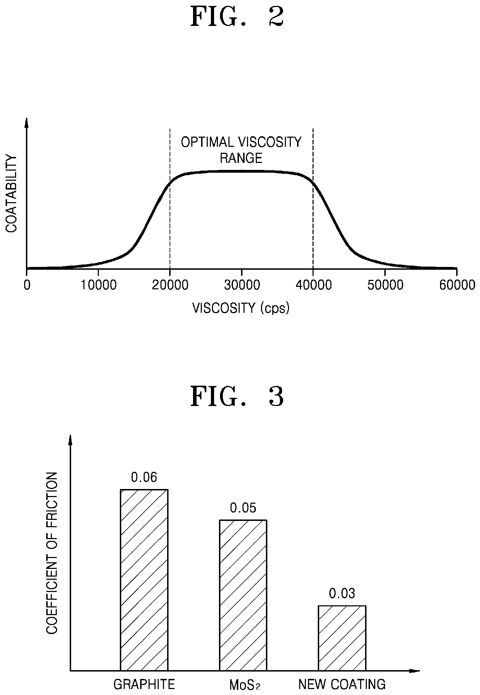

FIG. 1 is a graph showing the viscosity of the resin composition and the coefficient of friction of the coated layer according to the test examples of Table 1 based on the first parameter expressed as the product of the weight ratio and the average aspect ratio of CNTs, and FIG. 2 is a graph showing coatability based on the viscosity of the resin composition. In FIG. 1, each circle (●) has a horizontal axis coordinate indicating the value of the first parameter and a vertical axis coordinate indicating the viscosity of the resin composition, and each diamond (♦) has a horizontal axis coordinate indicating the value of the first parameter and a vertical axis coordinate indicating the coefficient of friction of the coated layer.

Referring to FIGS. 1 and 2, it is shown that the viscosity of the resin composition and the coefficient of friction of the coated layer may be controlled by adjusting the first parameter expressed as the product of the weight ratio and the average aspect ratio of CNTs.

Particularly, in case A when the first parameter expressed as the product of the weight ratio and the average aspect ratio of CNTs satisfies a range of 200 to 1600, the viscosity of the resin composition may be 20,000 cps to 40,000 cps and the coefficient of friction of the coated layer may be equal to or less than 0.1. Coatability should be guaranteed for stabilization of a process of coating the resin composition. As shown in FIG. 2, it is shown that the coatability is greatly reduced if the viscosity of the resin composition is less than 20,000 cps or greater than 40,000 cps (Test Examples 1, 13, and 14). It is also shown that friction between an engine piston and an internal wall of a cylinder is increased and thus fuel efficiency of the engine is reduced if the coefficient of friction of the coated layer is greater than 0.1 (Test Examples 1 and 2). As such, it may be understood that the resin composition according to an embodiment of the present invention contains the binder, the solvent, the solid lubricant, and the reinforcement, and the reinforcement includes CNTs meeting Inequality 1.

[Inequality 1]

$$200 \leq \text{CNT Content} \times \text{CNT Average Aspect Ratio} \leq 1600$$ (the CNT Content refers to a weight ratio of CNTs to the total resin composition, expressed in weight percent, i.e. wt%)

More specifically, in case B when the first parameter expressed as the product of the weight ratio and the average aspect ratio of CNTs satisfies a range of 500 to 1600, the viscosity of the resin composition may be 20,000 cps to 40,000 cps and the coefficient of friction of the coated layer may be equal to or less than 0.05. It is shown that friction between an engine piston and an internal wall of a cylinder is increased and thus not only fuel efficiency but also NVH properties of the engine are reduced if the coefficient of friction of the coated layer is greater than 0.05 (Test Examples 1 to 5). As such, it may be understood that the resin composition according to an embodiment of the present invention contains the binder, the solvent, the solid lubricant, and the reinforcement, and the reinforcement includes CNTs meeting Inequality 2.

[Inequality 2]

$$500 \leq \text{CNT Content} \times \text{CNT Average Aspect Ratio} \leq 1600$$ (the CNT Content refers to a weight ratio of CNTs to the total resin composition, expressed in weight percent, i.e. wt%)

As described above, the first parameter expressed as the product of the weight ratio and the average aspect ratio of CNTs has a technical meaning as a factor capable of simultaneously and effectively controlling the coefficient of friction of the coated layer and the viscosity of the resin composition. For example, in Test Examples 4 and 14 of Table 1, the weight ratio of CNTs is constantly maintained but the viscosity of the resin composition greatly varies depending on the aspect ratio of CNTs. In Test Examples 2 and 13 of Table 1, the aspect ratio of CNTs is constantly maintained but the coefficient of friction of the coated layer greatly varies depending on the weight ratio of CNTs. Therefore, the coefficient of friction of the coated layer and the viscosity of the resin composition may not be simultaneously and effectively controlled using only the weight ratio or the average aspect ratio of CNTs. In this point of view, the above-described first parameter leads to achievement of a better effect, is not merely another expression of a known property, and thus has a unique technical meaning.

**Second Parameter: Mixing Ratio of CNTs to Graphene**

Table 2 shows results of measuring the viscosity of the resin composition based on the second parameter expressed as the mixing ratio of CNTs and graphene serving as the reinforcement. Test examples of Table 2 show results of measuring the viscosity of the resin composition based on the mixing ratio of the reinforcement in a case when a total content of CNTs and graphene serving as the reinforcement is 2 wt% of the total resin composition on the assumption that the above-described first parameter is in a range of 200 to 1600. As such, it is shown that the viscosity of the resin composition may be additionally controlled by adjusting the second parameter represented by a mixing ratio of CNTs to graphene.

[Table 2]

| CNT : Graphene | 1:9 | 3:7 | 5:5 | 7:3 | 9:1 |
|---|---|---|---|---|---|
| Viscosity (cps) | 20,000 | 23,000 | 27,000 | 33,000 | 40,000 |

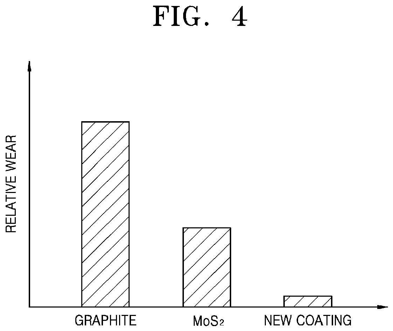

FIGS. 3 and 4 are graphs for comparing a coefficient of friction and wear resistance of a coated layer (new coating) implemented in a case when the mixing ratio of CNTs and graphene is 7:3 among the test examples of Table 2, to coefficients of friction and wear resistance of coated layers implemented using resin compositions containing graphite and $MoS_2$. Referring to FIGS. 3 and 4, it is shown that low-friction and wear-resistant properties of the coated layer implemented using the resin composition containing CNTs and graphene as the reinforcement.

According to the afore-described embodiments of the present invention, a resin composition for coating an engine piston and a method of fabricating the same, by which a coefficient of friction of a coated layer provided on the engine piston may be improved and stabilization of a coating process may be achieved, may be implemented. However, the scope of the present invention is not limited to the above effects.

While the present invention has been particularly shown and described with reference to embodiments thereof, it will be understood by those of ordinary skill in the art that various changes in form and details may be made therein without departing from the scope of the appended claims.

**Claims**

1. A resin composition for coating an engine piston, the resin composition being capable of providing a coated layer on at least part of the engine piston and comprising:

   a binder;
   a solvent;
   a solid lubricant; and
   a reinforcement;
   wherein a coefficient of friction of the coated layer ranges from 0.02 to 0.03;
   a viscosity of the resin composition ranges from 23,000 cps to 40,000 cps; and
   the reinforcement comprises carbon nanotubes (CNTs) and the CNTs meet the inequality given below:

$$800 \leq \text{CNT Content in weight percent, wt\%} \times \text{CNT Average Aspect Ratio} \leq 1332.$$

2. The resin composition of claim 1, wherein the reinforcement further comprises graphene.

3. The resin composition of claim 1, wherein the binder comprises polyamide-imide (PAI) or epoxy, wherein the solvent comprises N-methylpyrrolidone (NMP) or $\gamma$-butyrolactone (GBL), and wherein the solid lubricant comprises graphite, molybdenum disulfide ($MoS_2$), or polytetrafluoroethylene (PTFE).

4. A method of fabricating a resin composition according to claim 1 for coating an engine piston, the resin composition comprising carbon nanotubes (CNTs) as a reinforcement and being capable of providing a coated layer on at least part of the engine piston,
   the method comprising:
   adjusting a parameter represented by the product of the CNT content in weight percent, wt%, and the CNT Average Aspect Ratio, such that the parameter is in a range of 800 to 1332, a coefficient of friction of the coated layer ranges from 0.02 to 0.03, and a viscosity of the resin composition ranges from 23,000 cps to 40,000 cps.

5. The method of claim 4, wherein the reinforcement further comprises graphene, and wherein the method further comprises adjusting a second parameter represented by a mixing ratio of CNTs and graphene, to control the coefficient of friction of the coated layer and the viscosity of the resin composition.

**Patentansprüche**

1. Harzzusammensetzung zum Beschichten eines Motorkolbens, wobei die Harzzusammensetzung in der Lage ist, eine schichtförmig aufgebrachte Schicht auf mindestens einem Teil des Motorkolbens bereitzustellen und Folgendes umfasst:

   ein Bindemittel;
   ein Lösungsmittel;
   ein festes Schmiermittel; und
   ein Verstärkungsmittel;
   wobei ein Reibungskoeffizient der schichtförmig aufgebrachten Schicht im Bereich von 0,02 bis 0,03 liegt;
   eine Viskosität der Harzzusammensetzung im Bereich von 23.000 cPs bis 40.000 cPs liegt; und
   die Verstärkung Kohlenstoffnanoröhren (KNR) umfasst und die KNR der Ungleichheit, die unten angegeben ist, entsprechen:

$$800 \leq \text{KNR-Gehalt in Gewichtsprozent, Gew.-\% x KNR-Durchschnittsseitenverhältnis} \leq 1332.$$

2. Harzzusammensetzung nach Anspruch 1, wobei die Verstärkung ferner Graphen umfasst.

3. Harzzusammensetzung nach Anspruch 1, wobei das Bindemittel Polyamidimid (PAI) oder Epoxid umfasst, wobei das Lösungsmittel N-Methylpyrrolidon (NMP) oder $\gamma$-Butyrolacton (GBL) umfasst und wobei das feste Schmiermittel Graphit, Molybdändisulfid (MoS$_2$) oder Polytetrafluorethylen (PTFE) umfasst.

4. Verfahren für die Herstellung einer Harzzusammensetzung nach Anspruch 1 zum Beschichten eines Motorkolbens, wobei die Harzzusammensetzung Kohlenstoffnanoröhren (KNR) als Verstärkung umfasst und in der Lage ist, eine schichtförmig aufgebrachte Schicht auf mindestens einem Teil des Motorkolbens bereitzustellen, wobei das Verfahren Folgendes umfasst:
   Einstellen eines Parameters, der durch das Produkt des KNR-Gehalts in Gewichtsprozent, Gew.-% und das KNR-Durchschnittsseitenverhältnis dargestellt ist, derart, dass der Parameter in einem Bereich von 800 bis 1332 liegt, ein Reibungskoeffizient der schichtförmig aufgebrachten Schicht im Bereich von 0,02 bis 0,03 liegt und eine Viskosität der Harzzusammensetzung im Bereich von 23.000 cPs bis 40.000 cPs liegt.

5. Verfahren nach Anspruch 4, wobei die Verstärkung ferner Graphen umfasst und wobei das Verfahren ferner das Einstellen eines zweiten Parameters umfasst, der durch ein Mischverhältnis von KNR und Graphen dargestellt ist, um den Reibungskoeffizienten der schichtförmig aufgebrachten Schicht und die Viskosität der Harzzusammensetzung zu regulieren.

**Revendications**

1. Composition de résine pour le revêtement d'un piston de moteur, la composition de résine étant capable de fournir une couche revêtue sur au moins une partie du piston de moteur et comprenant:

   un liant;
   un solvant;
   un lubrifiant solide; et
   un agent de renforcement;
   où un coefficient de frottement de la couche revêtue s'étend de 0,02 à 0,03;
   une viscosité de la composition de résine s'étend de 23 000 Cps à 40 000 Cps; et
   l'agent de renforcement comprend des nanotubes de carbone (CNT) et les CNT satisfont l'inégalité présentée ci-dessous:

$$800 \leq \text{teneur en CNT en pourcentage en poids, \% en pds x rapport d'aspect moyen des CNT} \leq 1\ 332.$$

**2.** Composition de résine selon la revendication 1, l'agent de renforcement comprenant en outre du graphène.

**3.** Composition de résine selon la revendication 1, le liant comprenant du polyamide-imide (PAI) ou de l'époxy, où le solvant comprend de la N-méthylpyrrolidone (NMP) ou de la $\gamma$-butyrolactone (GBL), et où le lubrifiant solide comprend du graphite, du disulfure de molybdène ($MoS_2$), ou du polytétrafluoroéthylène (PTFE).

**4.** Procédé de fabrication d'une composition de résine selon la revendication 1 de revêtement d'un piston de moteur, la composition de résine comprenant des nanotubes de carbone (CNT) comme agent de renforcement et étant capable de fournir une couche revêtue sur au moins une partie du piston de moteur, le procédé comprenant:
l'ajustement d'un paramètre représenté par le produit de la teneur des CNT en pourcentage en poids, % en pds, et le rapport d'aspect moyen des CNT, de sorte que le paramètre se situe dans une plage de 800 à 1 332, un coefficient de frottement de la couche revêtue s'étend de 0,02 à 0,03, et une viscosité de la composition de résine s'étend de 23 000 Cps à 40 000 Cps.

**5.** Procédé selon la revendication 4, l'agent de renforcement comprenant en outre du graphène, et le procédé comprenant en outre l'ajustement d'un second paramètre représenté par un rapport de mélange des CNT et du graphène, pour réguler le coefficient de frottement de la couche revêtue et la viscosité de la composition de résine.

FIG. 1

# FIG. 2

# FIG. 3

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020070081566